# EUROPEAN PATENT SPECIFICATION

(11) **EP 2 892 956 B1**
(45) Date of publication and mention of the grant of the patent: **14.06.2017**
(21) Application number: 13834599.6
(22) Date of filing: 01.08.2013
(51) Int. Cl.: C08L 67/02, C08L 51/00, C08K 5/16, C08K 5/5313, H01B 3/42

(54) **FIRE-RETARDANT COPOLYETHERESTER COMPOSITION AND ARTICLES COMPRISING THE SAME**
FEUERFESTE COPOLYETHERESTERZUSAMMENSETZUNG UND ARTIKEL DAMIT
COMPOSITION DE COPOLYÉTHERESTER IGNIFUGE ET ARTICLES LA COMPRENANT

(30) Priority: 06.09.2012 CN 201210328131
(43) Date of publication of application: 15.07.2015
(73) Proprietor: E. I. du Pont de Nemours and Company, Wilmington, DE 19898 (US)
(72) Inventor: KARAYIANNI, Eleni, Ch-1206 Geneva (CH); LI, Ting, Shanghai 201203 (CN); NI, Yong, Shanghai 201203 (CN)
(74) Representative: Heinemann, Monica
(86) International application number: PCT/CN2013/080616
(87) International publication number: WO 2014/036870

(56) References cited:
- EP-A1- 1 691 376
- WO-A1-2008/011939
- WO-A1-2008/011939
- WO-A1-2012/024280
- CN-A- 1 875 434
- US-A1- 2011 319 534

## Description

### TECHNICAL FIELD

The disclosure is related to fire-retardant copolyetherester compositions with good thermal stability and articles comprising the same.

### BACKGROUND

Due to its excellent mechanical properties (e.g., tear strength, tensile strength, flex life, and abrasion resistance), polymeric compositions based on copolyetherester elastomers have been used in forming components for motorized vehicles and electrical/electronic devices. However, often times, electric arc may be formed and high temperature may be reached within the under-hood areas of vehicles and inside electrical/electronic devices. Thus, while maintaining other mechanical properties, it is desirable that such copolyetherester based compositions also have low flammability and high thermal stability.

Various flame retardant systems have been developed and used in polymeric material, e.g., polyesters, to improve the fire-resistance thereof. However, due to toxicity concerns, halogen-free flame retardants are gaining more and more attention. Among the various halogen-free flame retardants, phosphorus compounds (such as salts of phosphinic or diphosphinic acids) are used the most due to the stability and flame retardant effectiveness thereof. Prior art has also demonstrated that various types of synergistic compounds can be used as synergists in combination with the phosphorus compounds to further maximize the flame retardant effectiveness thereof. For example, U.S. Patent No. 6,547,992 discloses the use of synthetic inorganic compounds such as oxygen compounds of silicon, magnesium compounds, metal carbonates of metals of the second main group of the periodic table, red phosphorus, zinc compounds, aluminum compounds, or combinations thereof as flame retardant synergists; U.S. Patent No. 6,716,899 discloses the use of organic phosphorus-containing compounds as flame retardant synergists; U.S. Patent No. 6,365,071 discloses the use of nitrogen-containing compounds (e.g., melamine cyanurate, melamine phosphate, melamine pyrophosphate, or melamine diborate) as flame retardant synergists; and U.S. Patent No. 6,255,371 discloses the use of reaction products of phosphoric acids with melamine or condensed product of melamine (e.g., melamine polyphosphate (MPP)) as flame retardant synergists.

Core/shell polymers having a rubber-like (meth)acrylate core and an outer shell of vinyl-series homopolymer or copolymer have been known and used as impact modifiers in polyesters, see, e.g., U.S. Patent Application Publication No. 2003/0008141, 2006/0194052, and PCT Publication No. WO03/042299. In U.S. Patent Application Publication No. 2011/0319534 and 2011/0319536, it is also disclosed that 0-5 wt% of an impact modifier comprising a poly(ether-ester) elastomer and a (meth)acrylate impact modifier may be added into polyesters. While in PCT Patent Application Publication No. WO2011/017248, it is disclosed the use of a core/shell particles in copolyetherester resins for vibration damping and noise reduction. Moreover, U.S. Patent Application Publication No. 2011/0275743 discloses a halogen-free fire-retardant polyester composition, in which various vinyl resins were suggested to be added to improve the impact strength thereof.

However, there has been no disclosure in the prior art such composite rubber-based graft copolymers, in combination with a specific halogen-free flame retardant package, can improve chemical resistance for copolyetherester materials.

### SUMMARY

The purpose of the present disclosure is to provide a fire-retardant copolyetherester composition having improved thermal stability, which comprises: (a) 20-93.9 wt% of at least one copolyetherester; (b) 5-30 wt% of at least one halogen-free flame retardant; (c) 0.1-20 wt% of at least one nitrogen-containing compound; and (d) 1-30 wt% of at least one core/shell polymer having a rubber-like core and an outer shell, with the core produced from an acrylate, a methacrylate, or a mixture thereof and the outer shell comprising a vinyl-series homopolymer or copolymer, with the total weight of all components comprised in the composition totaling to 100 wt%, and wherein, the at least one halogen-free flame retardant comprises at least one selected from the group consisting of phosphinates of the formula (III), disphosphinates of the formula (IV), and combinations or polymers thereof 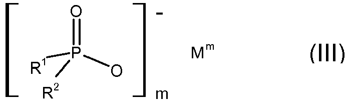 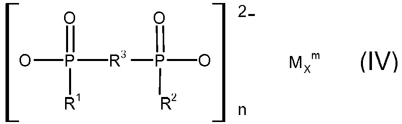 with R¹ and R² being identical or different and each of R¹ and R² being hydrogen, a linear, branched, or cyclic C₁ -C₆ alkyl group, or a C₆-C₁₀ aryl; R³ being a linear or branched C₁-C₁₀ alkylene group, a C₆-C₁₀ arylene group, a C₆-C₁₂ alkyl-arylene group, or a C₆-C₁₂ aryl-alkylene group; M being selected from calcium ions, aluminum ions, magnesium ions, zinc ions, antimony ions, tin ions, germanium ions, titanium ions, iron ions, zirconium ions, cerium ions, bismuth ions, strontium ions, manganese ions, lithium ions, sodium ions, potassium ions and combinations thereof; and m, n, and x each being a same or different integer of 1-4.

In one embodiment of the fire-retardant copolyetherester composition, the at least one halogen-free flame retardant is selected from the group consisting of aluminum methylethylphosphinate, aluminum diethylphosphinate, aluminum hypophosphite, and combinations or two or more thereof, or the at least one halogen-free flame retardant is aluminum methylethylphosphinate or aluminum diethylphosphinate.

In a further embodiment of the fire-retardant copolyetherester composition, the nitrogen-containing compound is selected from the group consisting of (i) melamine cyanurate, (ii) condensation products of melamine, (iii) reaction products of phosphoric acid with melamine, and (iv) reaction products of phosphoric acid with condensation products of melamine, or the at least one nitrogen-containing compound is melamine cyanurate.

In a yet further embodiment of the fire-retardant copolyetherester composition, the composition comprises 30-85 wt% of the at least one copolyetherester; 7.5-25 wt% of the at least one halogen-free flame retardant; 1-15 wt% of the at least one nitrogen-containing compound; and 1-20 wt% of the at least one core/shell polymer.

In a yet further embodiment of the fire-retardant copolyetherester composition, the composition comprises 40-70 wt% of the at least one copolyetherester; 10-25 wt% of the at least one halogen-free flame retardant; 2-15 wt% of the at least one nitrogen-containing compound; and 5-20 wt% of the at least one core/shell polymer.

Further provided herein is an article comprising at least one component part formed of the fire-retardant copolyetherester composition described hereabove. Preferably, the article is selected from motorized vehicle parts and electrical/electronic devices.

In one embodiment of the article, the article is selected from insulated wires and cables, and preferably, the insulated wires and cables comprise one or more insulating layers and/or insulating jackets that are formed of the fire-retardant copolyetherester composition described hereabove.

In accordance with the present disclosure, when a range is given with two particular end points, it is understood that the range includes any value that is within the two particular end points and any value that is equal to or about equal to any of the two end points.

### DETAILED DESCRIPTION

Disclosed herein is a fire-retardant copolyetherester composition comprising,
(a) about 20-93.9 wt% of at least one copolyetherester;
(b) about 5-30 wt% of at least one halogen-free flame retardant;
(c) about 0.1-20 wt% of at least one nitrogen-containing compound; and
(d) about 1-30 wt% of at least one core/shell polymer having a rubber-like core and an outer shell, with the core produced from an acrylate, a methacrylate, or a mixture thereof and the outer shell comprising a vinyl-series homopolymer or copolymer.

The copolyetheresters suitable for use in the compositions disclosed herein may be copolymers having a multiplicity of recurring long-chain ester units and recurring short-chain ester units joined head-to-tail through ester linkages, the long-chain ester units being represented by formula (I): 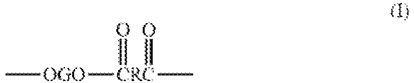 and the short-chain ester units being represented by formula (II): 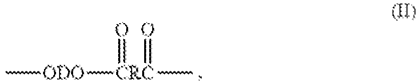 wherein,
G is a divalent radical remaining after the removal of terminal hydroxyl groups from poly(alkylene oxide) glycols having a number average molecular weight of about 400-6000;
R is a divalent radical remaining after the removal of carboxyl groups from a dicarboxylic acid having a number average molecular weight of about 300 or less;
D is a divalent radical remaining after the removal of hydroxyl groups from a glycol having a number average molecular weight of about 250 or less, and
wherein,
the at least one copolyetherester contains about 1-85 wt% of the recurring long-chain ester units and about 15-99 wt% of the recurring short-chain ester units.

In one embodiment, the copolyetherester used in the composition disclosed herein contains about 5-80 wt% of the recurring long-chain ester units and about 20-95 wt% of the recurring short-chain ester units.

In a further embodiment, the copolyetherester used in the composition disclosed herein contains about 10-75 wt% of the recurring long-chain ester units and about 25-90 wt% of the recurring short-chain ester units.

In a yet further embodiment, the copolyetherester used in the composition disclosed herein contains about 40-75 wt% of the recurring long-chain ester units and about 25-60 wt% of the recurring short-chain ester units.

As used herein, the term "long-chain ester units" refers to reaction products of a long-chain glycol with a dicarboxylic acid. Suitable long-chain glycols are poly(alkylene oxide) glycols having terminal hydroxyl groups and a number average molecular weight of about 400-6000, or about 600-3000, which include, without limitation, poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. The long-chain glycols used herein may also be combinations of two or more of the above glycols.

As used herein, the term "short-chain ester units" refers to reaction products of a low molecular weight glycol or an ester-forming derivative thereof with a dicarboxylic acid. Suitable low molecular weight glycols are those having a number average molecular weight of about 250 or lower, or about 10-250, or about 20-150, or about 50-100, which include, without limitation, aliphatic dihydroxy compounds, alicyclic dihydroxy compounds, and aromatic dihydroxy compounds (including bisphenols). In one embodiment, the low molecular weight glycol used herein is a dihydroxy compound having 2-15 carbon atoms, such as ethylene glycol; propylene glycol; isobutylene glycol; 1,4-tetramethylene glycol; pentamethylene glycol; 2,2-dimethyltrimethylene glycol; hexamethylene glycol; decamethylene glycol; dihydroxycyclohexane; cyclohexanedimethanol; resorcinol; hydroquinone; 1,5-dihydroxynaphthalene; or the like. In a further embodiment, the low molecular weight glycol used herein is a dihydroxy compound having 2-8 carbon atoms. In a yet further embodiment, the low molecular weight glycol used herein is 1,4-tetramethylene glycol. Bisphenols that are useful herein include, without limitation, bis(p-hydroxy)diphenyl, bis(p-hydroxyphenyl)methane, bis(p-hydroxyphenyl)propane, and mixtures of two or more thereof.

The ester-forming derivatives of low molecular weight glycols useful herein include those derived from the low molecular weight glycols described above, such as ester-forming derivatives of ethylene glycol (e.g., ethylene oxide or ethylene carbonate) or ester-forming derivatives of resorcinol (e.g., resorcinol diacetate). As used herein, the number average molecular weight limitations pertain to the low molecular weight glycols only. Therefore, a compound that is an ester-forming derivative of a glycol and has a number average molecular weight more than 250 can also be used herein, provided that the corresponding glycol has a number average molecular weight of about 250 or lower.

The "dicarboxylic acids" useful for reaction with the above described long-chain glycols or low molecular weight glycols are those low molecular weight (i.e., number average molecular weight of about 300 or lower, or about 10-300, or about 30-200, or about 50-100) aliphatic, alicyclic, or aromatic dicarboxylic acids.

The term "aliphatic dicarboxylic acids" used herein refers to those carboxylic acids having two carboxyl groups each attached to a saturated carbon atom. If the carbon atom to which the carboxyl group is attached to is saturated and is in a ring, the acid is referred to as an "alicyclic dicarboxylic acid". The term "aromatic dicarboxylic acids" used herein refers to those dicarboxylic acids having two carboxyl groups each attached to a carbon atom in an aromatic ring structure. It is not necessary that both functional carboxyl groups in the aromatic dicarboxylic acid be attached to the same aromatic ring. Where more than one ring is present, they can be joined by aliphatic or aromatic divalent radicals or divalent radical such as -O- or -SO₂-.

The aliphatic or alicyclic dicarboxylic acids useful herein include, without limitation, sebacic acid; 1,3-cyclohexane dicarboxylic acid; 1,4-cyclohexane dicarboxylic acid; adipic acid; glutaric acid; 4-cyclohexane-1,2-dicarboxylic acid; 2-ethyl suberic acid; cyclopentane dicarboxylic acid; decahydro-1,5-naphthylene dicarboxylic acid; 4,4'-bicyclohexyl dicarboxylic acid; decahydro-2,6-naphthylene dicarboxylic acid; 4,4'-methylenebis(cyclohexyl) carboxylic acid; 3,4-furan dicarboxylic acid; and mixtures of two or more thereof. In one embodiment, the dicarboxylic acids used herein are selected from cyclohexane dicarboxylic acids, adipic acids, and mixtures thereof.

The aromatic dicarboxylic acids useful herein include, without limitation, phthalic acids; terephthalic acids; isophthalic acids; dibenzoic acids; dicarboxylic compounds with two benzene nuclei (such as bis(p-carboxyphenyl)methane; p-oxy-1,5-naphthalene dicarboxylic acid; 2,6-naphthalene dicarboxylic acid; 2,7-naphthalene dicarboxylic acid; or 4,4'-sulfonyl dibenzoic acid); and C₁-C₁₂ alkyl and ring substitution derivatives of the aromatic dicarboxylic acids described above (such as halo, alkoxy, and aryl derivatives thereof). The aromatic dicarboxylic acids useful herein may also be, for example, hydroxyl acids such as p-(β-hydroxyethoxy)benzoic acid.

In one embodiment of the compositions disclosed herein, the dicarboxylic acids used to form the copolyetheresters component may be selected from aromatic dicarboxylic acids. In a further embodiment, the dicarboxylic acids may be selected from aromatic dicarboxylic acids having about 8-16 carbon atoms. In a yet further embodiment, the dicarboxylic acids may be terephthalic acid alone or a mixture of terephthalic acid with phthalic acid and/or isophthalic acid.

In addition, the dicarboxylic acids useful herein may also include functional equivalents of dicarboxylic acids. In forming the copolyetheresters, the functional equivalents of dicarboxylic acids reacts with the above described long-chain and low molecular weight glycols substantially the same way as dicarboxylic acids. Useful functional equivalents of dicarboxylic acids include ester and ester-forming derivatives of dicarboxylic acids, such as acid halides and anhydrides. As used herein, the number average molecular weight limitations pertain only to the corresponding dicarboxylic acids, not the functional equivalents thereof (such as the ester or ester-forming derivatives thereof). Therefore, a compound that is a functional equivalent of a dicarboxylic acid and has a number average molecular weight more than 300 can also be used herein, provided that the corresponding dicarboxylic acid has a number average molecular weight of about 300 or lower. Moreover, the dicarboxylic acids may also contain any substituent groups or combinations thereof that do not substantially interfere with the copolyetherester formation and the use of the copolyetherester in the compositions disclosed herein.

The long-chain glycols used in forming the copolyetherester component of the composition disclosed herein may also be mixtures of two or more long-chain glycols. Similarly, the low molecular weight glycols and dicarboxylic acids used in forming the copolyetherester component may also be mixtures of two or more low molecular weight glycols and mixtures of two or more dicarboxylic acids, respectively. In a preferred embodiment, at least about 70 mol% of the groups represented by R in Formulas (I) and (II) above are 1,4-phenolene radicals, and at least 70 mol% of the groups represented by D in Formula (II) above are 1,4-butylene radicals. When two or more dicarboxylic acids are used in forming the copolyetherester, it is preferred to use a mixture of terephthalic acid and isophthalic acid, while when two or more low molecular weight glycols are used, it is preferred to use a mixture of 1,4-tetramethylene glycol and hexamethylene glycol.

The at least one copolyetherester comprised in the fire-retardant copolyetherester composition disclosed herein may also be a blend of two or more copolyetheresters. It is not required that the copolyetheresters comprised in the blend, individually meet the weight percentages requirements disclosed hereinbefore for the short-chain and long-chain ester units. However, the blend of two or more copolyetheresters must conform to the values described hereinbefore for the copolyetheresters on a weighted average basis. For example, in a blend that contains equal amounts of two copolyetheresters, one copolyetherester may contain about 10 wt% of the short-chain ester units and the other copolyetherester may contain about 80 wt% of the short-chain ester units for a weighted average of about 45 wt% of the short-chain ester units in the blend.

In one embodiment, the at least one copolyetherester component comprised in the fire-retardant copolyetherester composition disclosed herein is obtained by the copolymerization of a dicarboxylic acid ester selected from esters of terephthalic acid, esters of isophthalic acid, and mixtures thereof, with a lower molecular weight glycol that is 1 ,4-tetramethylene glycol and a long-chain glycol that is poly(tetramethylene ether) glycol or ethylene oxide-capped polypropylene oxide glycol. In a further embodiment, the at least one copolyetherester is obtained by the copolymerization of an ester of terephthalic acid (e.g., dimethylterephthalate) with 1,4-tetramethylene glycol and poly(tetramethylene ether) glycol.

The copolyetheresters useful in the compositions disclosed herein may be made by any suitable methods known to those skilled in the art, such as by using a conventional ester interchange reaction.

In one embodiment, the method involves heating an dicarboxylic acid ester (e.g., dimethylterephthalate) with a poly(alkylene oxide) glycol and a molar excess of a low molecular weight glycol (e.g., 1,4-tetramethylene glycol) in the presence of a catalyst, followed by distilling off methanol formed by the interchange reaction and continuing the heat until methanol evolution is complete. Depending on the selection of temperatures and catalyst types and the amount of the low molecular weight glycols used, the polymerization may be completed within a few minutes to a few hours and results in formation of a low molecular weight pre-polymer. Such pre-polymers can also be prepared by a number of alternate esterification or ester interchange processes, for example, by reacting a long-chain glycol with a short-chain ester homopolymer or copolymer in the presence of catalyst until randomization occurs. The short-chain ester homopolymer or copolymer can be prepared by the ester interchange either between a dimethyl ester (e.g., dimethylterephthalate) and a low molecular weight glycol (e.g, 1,4-tetramethylene glycol) as described above, or between a free acid (e.g., terephthalic acid) and a glycol acetate (e.g., 1,4-butanediol diacetate). Alternatively, the short-chain ester homopolymer or copolymer can be prepared by direct esterification from appropriate acids (e.g., terephthalic acid), anhydrides (e.g., phthalic anhydride), or acid chlorides (e.g., terephthaloyl chloride) with glycols (e.g., 1,4-tetramethylene glycol). Or, the short-chain ester homopolymer or copolymer may be prepared by any other suitable processes, such as the reaction of dicarboxylic acids with cyclic ethers or carbonates.

Further, the pre-polymers obtained as described above can be converted to high molecular weight copolyetheresters by the distillation of the excess low molecular weight glycols. Such process is known as "polycondensation". Additional ester interchange occurs during the polycondensation process to increase the molecular weight and to randomize the arrangement of the copolyetherester units. In general, to obtained the best results, the polycondensation may be run at a pressure of less than about 1 mmHg and a temperature of about 240-260°C, in the presence of antioxidants (such as 1,6-bis-(3,5-di-tert-butyl-4-hydroxyphenol)propionamido]-hexane or 1,3,5-trimethyl-2,4,6-tris[3,5-di-tert-butyl-4-hydroxybenzyl]benzene), and for less than about 2 hours. In order to avoid excessive holding time at high temperatures with possible irreversible thermal degradation, it is advantageous to employ a catalyst for ester interchange reactions. A wide variety of catalysts can be used herein, which include, without limitation, organic titanates (such as tetrabutyl titanate alone or in combination with magnesium or calcium acetates), complex titanates (such as those derived from alkali or alkaline earth metal alkoxides and titanate esters), inorganic titanates (such as lanthanum titanate), calcium acetate/antimony trioxide mixtures, lithium and magnesium alkoxides, stannous catalysts, and mixtures of two or more thereof.

The copolyetheresters useful in the compositions disclosed herein can also be obtained commercially from E.I. du Pont de Nemours and Company (U.S.A.) (hereafter "DuPont") under the trade name Hytrel®.

Based on the total weight of the fire-retardant copolyetherester composition disclosed herein, the at least one copolyetherester may be present at a level of about 20-93.9 wt%, or about 30-85 wt%, or about 40-70 wt%.

Halogen-free flame retardants suitable for use in the compositions disclosed herein may be selected from phosphinates of the formula (III), disphosphinates of the formula (IV), and combinations or polymers thereof 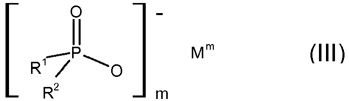 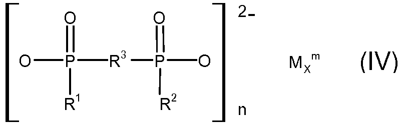 wherein R¹ and R² may be identical or different and each of R¹ and R² is hydrogen, a linear, branched, or cyclic C₁ -C₆ alkyl group, or a C₆-C₁₀ aryl group; R³ is a linear or branched C₁-C₁₀ alkylene group, a C₆-C₁₀ arylene group, a C₆-C₁₂ alkyl-arylene group, or a C₆-C₁₂ aryl-alkylene group; M is selected from calcium ions, aluminum ions, magnesium ions, zinc ions, antimony ions, tin ions, germanium ions, titanium ions, iron ions, zirconium ions, cerium ions, bismuth ions, strontium ions, manganese ions, lithium ions, sodium ions, potassium ions and combinations thereof; each of m, n, and x is a same or different integer of 1-4. Preferably, R¹ and R² may be independently selected from hydrogen, methyl, ethyl, n-propyl, isopropyl, *n*-butyl, *tert-*butyl, *n*-pentyl, and phenyl; R³ may be selected from methylene, ethylene, *n*-propylene, isopropylene, *n*-butylene, *tert-*butylene, *n*-pentylene, *n*-octylene, *n*-dodecylene, phenylene, naphthylene, methylphenylene, ethylphenylene, *tert*-butylphenylene, methylnaphthylene, ethylnaphthylene, *tert*-butylnaphthylene, phenylmethylene, phenylethylene, phenylpropylene, and phenylbutylene; and M may be selected from aluminum and zinc ions.

In one embodiment, the halogen-free flame retardants used herein are selected from aluminum methylethylphosphinate, aluminum diethylphosphinate, and combinations thereof.

The halogen-free flame retardants used herein may also be obtained commercially from Clariant (Switzerland) under the trade name Exolit™ OP. Preferably halogen-free flame retardants used herein is obtained from Clariant under the trade name Exolit™ OP1230.

Based on the total weight of the fire-retardant copolyetherester composition disclosed herein, the at least one halogen-free flame retardant may be present at a level of about 5-30 wt%, or about 7.5-25 wt%, or about 10-25 wt%.

The nitrogen containing compounds suitable for use in the fire-retardant copolyetherester compositions disclosed herein may include, without limitation, those described, for example in U.S. Patent Nos. 6,365,071; and 7,255,814.

In one embodiment, the nitrogen containing compounds used herein are selected from melamine, benzoguanamine, tris(hydroxyethyl)isocyanurate, allantoine, glycouril, dicyandiamide, guanidine and carbodiimide, and derivatives thereof.

In a further embodiment, the nitrogen containing compounds used herein may be selected from melamine derivatives, which include, without limitation, (i) melamine cyanurate, (ii) condensation products of melamine, (iii) reaction products of phosphoric acid with melamine, and (iv) reaction products of phosphoric acid with condensation products of melamine. Suitable condensation products may include, without limitation, melem, melam and melon, as well as higher derivatives and mixtures thereof. Condensation products of melamine can be produced by any suitable methods (e.g., those described in PCT Patent Publication No. WO9616948). Reaction products of phosphoric acid with melamine or reaction products of phosphoric acid with condensation products of melamine are herein understood compounds, which result from the reaction of melamine with a phosphoric acid or the reaction of a condensation product of melamine (e.g., melem, melam, or melon) with a phosphoric acid. Examples include, without limitation, dimelaminephosphate, dimelamine pyrophosphate, melamine phosphate, melamine polyphosphate, melamine pyrophosphate, melamine polyphosphate, melam polyphosphate, melon polyphosphate, and melem polyphosphate, as are described, e.g., in PCT Patent Publication No. WO9839306.

In a yet further embodiment, the at least one nitrogen containing compound comprised in the composition disclosed herein is a melamine cyanurate.

Based on the total weight of the fire-retardant copolyetherester composition disclosed herein, the at least one nitrogen containing compound may be present at a level of about 0.1-20 wt%, or about 1-15 wt%, or about 2-15 wt%.

The core/shell polymer used herein are those having a rubber-like core and an outer shell, wherein the rubber-like core is produced from an acrylate, a methacrylate, or a mixture thereof and that the outer shell comprises a vinyl-series polymer or copolymer.

In one embodiment, the rubber-like core comprises or is formed of an alkyl acrylate polymer. For example, the core comprised in the core/shell polymer may be an acrylic rubber core, which is obtained by polymerizing an alkyl acrylate that has an alkyl group of 1 to 6 carbon atoms and a Tg lower than about 10°C, with the presence of a crosslinking monomer and/or a grafting monomer. In particular, the alkyl acrylate used herein may be *n*-butyl acrylate. In a further embodiment, the outer shell comprised in the core comprises or is formed of an alkyl methacrylate polymer.

The crosslinking monomers used in forming the rubber-like core of the core/shell polymer may be a multi-ethylenically unsaturated monomer having a plurality of addition-polymerizable reactive groups all of which can be polymerized at substantially the same reaction rate. Exemplary crosslinking monomer useful herein include, without limitation, butylene diacrylate; butylene dimethacrylate; poly(acrylate ester) or poly(methacrylate ester) of polyol (such as trimethylolpropane trimethacrylate); divinylbenzene; trivinylbenzene; vinyl acrylate; vinyl methacrylate; and combinations of two or more thereof. In one embodiment, the crosslinking monomer used herein is butylene diacrylate.

The grafting monomer used in forming the rubber-like core of the core/shell polymer may be a multi-ethylenically unsaturated monomer having a plurality of addition-polymerizable reactive groups, at least one of which can be polymerized at a polymerization rate substantially different from the rate at which at least one of the other reactive groups can be polymerized. The grafting monomers used herein have a function of leaving an unsaturated group in the elastomer phase, specifically on or near the surfaces of the elastomer particles (the rubber-like cores), particularly in a later polymerization step. Therefore, when a stiff thermoplastic shell layer is subsequently formed by polymerization on the surface of the rubber-like core, the addition-polymerizable unsaturated reactive group provided and left by the grafting monomer takes part in the shell layer-forming reaction. As a result, at least a part of the shell layer can be chemically attached to the surface of the rubber-like core. Exemplary grafting monomers useful herein are alkyl group-containing monomers of allyl esters of ethylenically unsaturated dibasic acids, such as allyl acrylate, allyl methacrylate, diallyl maleate, diallyl fumarate, diallyl itaconate, acidic allyl maleate, acidic allyl fumarate, and acidic allyl itaconate. In particular, the grafting monomer used herein may be allyl methacrylate or diallyl maleate.

The outer shell-forming monomer that can be used herein is a monomer capable of forming a vinyl-series homopolymer or copolymer. Specific examples of the shell-forming monomers include, without limitation, methacrylates, acrylonitrile, alkyl acrylates, alkyl methacrylates, dialkylaminoalkyl methacrylates, styrene, and mixtures of two or more thereof. The above shell-forming monomers may be used singly, or in a mixture of two or more thereof. In certain embodiments, the shell-forming monomers used herein are methacrylates having an alkyl group of 1 to 16 carbon atoms, or alkyl methacrylates having an alkyl group of 1 to 4 carbon atoms.

The core/shell polymers used herein may be produced by any method, and the production method is not particularly limited. In one embodiment, the core/shell polymers may be produced using an emulsion polymerization method. For example, the core/shell polymers used herein are produced by a two-step process, which includes first polymerizing a monomer system comprising butyl acrylate, as well as butylene diacrylate as the crosslinking agent, and allyl methacrylate or allyl maleate as the grafting agent to form the rubber-like core, and then polymerizing the shell-forming monomers (e.g., methyl methacrylate) to form the polymer shell over the rubber-like core.

In accordance to the present disclosure, the ratio in thickness of the rubber-like core part and the shell part of the core/shell polymer used herein is not particularly limited, and the thickness ratio may be general one of the core part to the shell part formed in a usual manner by, for example, an emulsion polymerization method.

In addition, the core/shell polymers use herein may have a median particle size D₅₀ ranging from about 50 to 700 nm, or about 100 to 500 nm.

The core/shell polymers used herein also are available commercially, for example, from Dow Chemical Corporation (U.S.A.) ( 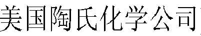 ) under the trade name PARALOID™ EXL-2300, PARALOID™ EXL-2330.

Based on the total weight of the fire-retardant copolyetherester composition disclosed herein, the at least one core/shell polymer may be present at a level of about 1-30 wt%, or about 1-20 wt%, or about 5-20 wt%.

The copolyetherester compositions disclosed herein are melt-mixed blends, wherein all of the polymeric components are well-dispersed within each other and all of the non-polymeric ingredients are homogeneously dispersed in and bound by the polymer matrix, such that the blend forms a unified whole. Any melt-mixing method may be used to combine the polymeric components and non-polymeric ingredients of the composition disclosed herein.

Prior art has taught that core/shell polymers can be used as impact modifiers in polymer compositions. And as demonstrated herebelow in the example section, the addition of the core/shell polymers in fire-retardant copolyetherester compositions indeed causes the hardness of the compositions to decrease. However, and surprisingly, it is also shown that the chemical resistant property of the compositions is very much improved with the addition of the core/shell polymers.

Further disclosed herein are articles comprising one or more component parts formed of the fire-retardant copolyetherester compositions disclosed herein. The articles may include, without limitation, motorized vehicles, electrical/electronic devices, wire/cables, furniture, footwear, roof structure, outdoor apparels, water management system, etc.

In one embodiment, the articles are selected from motorized vehicles. In such embodiments, the fire-retardant copolyetherester compositions disclosed herein may be used to form component parts such as airduct, constant velocity joint (CVJ) boot, etc.

In a further embodiment, the articles are selected from wire and cables. In such embodiments, the fire-retardant copolyetherester composition disclosed herein may be used to form insulating layers or jacket for wire and cable. More particularly, the articles may be selected from wires and cables, which comprise insulating layers and/or jackets formed of the fire-retardant copolyetherester compositions disclosed herein. For example, the article may be an insulated wire or cable, which comprises two or more electrically conductive cores, two or more insulating layers each surrounding one of the electrically conductive cores, and optionally an insulating jacket surrounding the electrically conductive cores and the insulating layers, wherein the insulating layers and/or the insulating jacket are formed of the fire-retardant copolyetherester composition disclosed herein.

### EXAMPLES

### Material:

- Copolyetherester: copolyetherester elastomer obtained from DuPont under the trade name Hytrel®3078;
- PBT: polybutylene terephthalate obtained from Chang Chun Plastics Co., LTD. (Taiwan) under the trade name PBT 1100-211 D;
- C/S: butyl-acrylate rubber based all-acrylic core/shell impact modifier obtained from Dow Chemical Corporation under the trade name Paraloid™ EXL2314;
- ECP-1: ethylene/methyl acrylate copolymer obtained from DuPont under the tradename Elvaloy®AC1300;
- ECP-2: ethylene/butylacrylate/glycidylmethacrylate terpolymer obtained from DuPont under the tradename Elvaloy®PTW;
- FR: an aluminum diethylphosphinate based halogen-free flame retardant having a median particle size D₅₀ equal to about 30 µm and obtained from Clariant under the trade name Exolit™ OP1230;
- MC: melamine cyanurate obtained from Hangzhou JLS Flame Retardants Chemical Co., Ltd. (China);
- AO-1: a phenolic primary antioxidant (pentaerythritol tetrakis(3-(3,5-di-tert-butyl-4-hydroxyphenyl)propionate)) obtained from BASF (Germany) ( 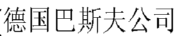 ) under the trade name Irganox™ 1010;
- AO-2: a phosphite ester antioxidant (tris-(2,4-di-tert-butyl-phenyl)-phosphite) obtained from BASF under the trade name Irgafos™ 168;
- AO-3: sterically hindered phenolic antioxidant (1,3,5-tris(3,5-di-tert-butyl-4-hydroxybenzyl)-1,3,5-triazine-2,4,6(1 H,3H,5H)-trione) obtained from BASF under the trade name Irganox™ 3114FF;
- AO-4: didodecyl 3,3'-thiodipropionate obtained from BASF under the trade name Irganox™ PS 800FL;
- CM: color masterbatch obtained from Polyone (U.S.A.) which was comprised of copolyether ester copolymer resins (obtained from DuPont under the trade name Hytrel® 4056) and color pigments;
- HALS: hindered amine light stabilizer obtained from BASF under the trade name Chimassorb™ 944FD;
- UVA-1: UV absorber (2-(5-chloro-2H-benzotriazole-2-yl)-6-(1,1-dimethylethyl)-4-methyl) obtained from BASF under the trade name Tinuvin™ 326;
- UVA-2: UV absorber (tetraethyl 2,2'-(1,4-phenylenedimethylidyne)bismalonate) obtained from Clariant under the trade name Hostavin™ B-CAP.

### Comparative Example CE1 and Examples E1-E3

In each of the Comparative Example CE and Examples E1-E3, a copolyetherester composition resin was prepared as follows: appropriate amounts of copolyetherester, flame retardants, melamine cyanurate, and other additives (as listed in Table 1) were dried, pre-mixed, and melt blended in a ZSK26 twin-screw extruder (purchased from Coperion Werner & Pfleiderer GmbH & Co., Germany) with the extruder temperature set at 190-210°C, the extrusion speed at 350 rpm, and the throughput at 30 kg/hr.

The resins as such obtained were then injection molded (with the process temperature set at about 200°C) into 100x100x2 mm plaques. Using these plaques, the Shore A hardness of the resins were measured in accordance with DIN 53505 and the results are tabulated in Table 1.

Further the 100x100x2 mm molding plaques in each example were die cut in flow direction into dumbbell test bars (in accordance with IS0527-2, 5A). Using one set of these dumbbell test bars, the tensile strain at break and the tensile stress at break of the resins in each example were measured in accordance with ISO527 and the results are tabulated in Table 1.

Thereafter, another set of dumbbell test bars in each example were aged in an 121°C oven for 168 hours before the tensile strain at break and the tensile stress at break thereof were measured. The retention of strain post aging and the retention of stress post aging of the test bars in each example were then calculated and tabulated in Table 1.

Additionally, the chemical resistant properties of the resins in each example were determined using the dumbbell test bars prepared as above. Briefly, certain chemicals were spread over the neck region of each dumbbell test bar with a circular motion and the chemical coated test bars were conditioned at room temperature for 24 hours with or without a 180° bend. The tensile strain at break and the tensile stress at break of the test bars (chemical treated) were measured. The retention of strain post chemical treatment and retention of stress post chemical treatment of the test bars in each example were then calculated. For those samples where the retention of strain post chemical treatment (with and without bending) and the retention of stress post chemical treatment (with and without bending) were measured as more than 75% were recorded as "Pass" in Table 1. The 19 chemicals used herein are:
- Banana Boat Sunscreen (SPF 30);
- Ivory Dish Soap;
- SC Johnson Fantastik Cleaner;
- French's Yellow Mustard;
- Coca-Cola;
- 70% Isopropyl Alcohol;
- Extra Virgin Olive Oil;
- Vaseline Intensive Care Hand Lotion;
- Heinz Ketchup;
- Kraft Mayonnaise;
- Chlorox Formula 409 Cleaner;
- SC Johnson Windex Cleaner with Ammonia;
- Acetone;
- Artifical Sweat;
- Fruits & Passion Cucina Coriander & Olive Hand Cream;
- Loreal Studioline Megagel Hair Gel;
- Mabelline Lip Polish;
- Maybelline Expert Wear Blush - Beach Plum Rouge; and
- Sebum.

Finally, in each example, insulated conducting wires were prepared using the resins obtained above, wherein each of the insulated conducting wires had a circular cross section and a diameter of about 2 mm, and wherein each of the insulated conducting wires had an insulating jacket made of the copolyetherester composition and encircling conductive core that was made of 91 stranded copper wires. Following UL1581, the flammability (VW-1) of the insulated conducting wires as such prepared were measured and results are tabulated in Table 1 below.

As demonstrated below, with the addition of core/shell polymers (C/S), the chemical resistance of the halogen-free fire-retardant copolyetherester composition resins (including FR and MC) was very much improved (see E1, E2, or E3 v.s. CE1).

**TABLE 1**

| | CE1 | E1 | E2 | E3 |
|---|---|---|---|---|
| Compositions | | | | |
| Copolyetherester (wt%) | 66.79 | 56.79 | 56.39 | 62.39 |
| C/S (wt%) | - | 10.00 | 10.00 | 10.00 |
| FR (wt%) | 20.00 | 20.00 | 20.00 | 16.00 |
| MC (wt%) | 10.00 | 10.00 | 10.00 | 8.00 |
| AO-1 (wt%) | 0.30 | 0.30 | - | - |
| AO-2 (wt%) | 0.30 | 0.30 | - | - |
| AO-3 (wt%) | - | - | 0.50 | 0.50 |
| AO-4 (wt%) | - | - | 0.50 | 0.50 |
| MB-1105 (wt%) | 2.00 | 2.00 | 2.00 | 2.00 |
| HALS (wt%) | 0.30 | 0.30 | 0.30 | 0.30 |
| UVA-1 (wt%) | 0.26 | 0.26 | 0.26 | 0.26 |
| UVA-2 (wt%) | 0.05 | 0.05 | 0.05 | 0.05 |

| Properties | | | | |
|---|---|---|---|---|
| Hardness Shore A, 3s | 90.1 | 90.0 | 89.9 | 88.7 |
| tensile stress at break (MPa) | 10.32 | 8.55 | 9.45 | 9.80 |
| tensile strain at break (%) | 532.78 | 433.75 | 507.92 | 525.03 |
| Retention of stress at break post aging(121 °C, 168 hours) | 88.3% | 75.9% | 89.3% | 94.7% |
| Retention of strain at break post aging (121 °C, 168 hours) | 70.0% | 69.3% | 65.4% | 88.9% |
| Flammability, VW-1, UL1581 | 100% | 100% | 100% | 100% |

| Chemical resistance (19 chemicals) | | | | |
|---|---|---|---|---|
| Retention of tensile stress at break (%) (without bending) | Failed in 2 chemicals | Pass | Pass | Pass |
| Retention of tensile strain at break (%) (without bending) | Failed in 1 chemical | Pass | Pass | Pass |
| Retention of tensile stress at break (%) (with 180° bending) | Failed in 2 chemicals | Pass | Pass | Pass |
| Retention of tensile strain at break (%) (with 180° bending) | Failed in 2 chemicals | Pass | Pass | Pass |

### Comparative Examples CE2-CE14 and Example E4

In each of the Comparative Examples CE2-CE14 and Examples E4, a copolyetherester or PBT composition resin was prepared as follows: appropriate amounts of copolyetherester or PBT, flame retardants, and other additives (as listed in Table 2) were dried, pre-mixed, and melt blended in a ZSK26 twin-screw extruder (purchased from Coperion Werner & Pfleiderer GmbH & Co., Germany) with the extruder temperature set at 190-210°C, the extrusion speed at 350 rpm, and the throughput at 30 kg/hr.

Similarly to the process described above, the composition resin in each example was molded into dumbbell test bars and the chemical resistance properties of each composition were measured (see results in Tables 2 and 3).

Finally, as described above, insulated conducting wires were prepared using the copolyetherester copolymer composition resins obtained above in CE2-CE2-CE10 and E4 and the flammability (VW-1) of the insulated conducting wires as such prepared were measured (see results in Table 2).

As demonstrated herein, in halogen-free fire-retardant copolyetherester copolymer resins, the addition of GCP-1 improved the chemical resistance thereof (see E4 v.s. CE8). However, the addition of other impact modifiers (e.g., ECP-1 and ECP-2) failed to improve the chemical resistance of the same halogen fire-retardant copolyetherester resins (see CE9 and CE10). Moreover, in halogen-free fire-retardant PBT resins, none of the above impact modifiers (GCP-1 or ECP-1 or ECP-2) could improve the chemical resistance properties thereof (see CE11-CE14).

**TABLE 2**

| | CE2 | CE3 | CE4 | CE5 | CE6 | CE7 | CE8 | E4 | CE9 | CE10 |
|---|---|---|---|---|---|---|---|---|---|---|
| Compositions | | | | | | | | | | |
| Copolyetherester (wt%) | 96.79 | 86.79 | 76.79 | 66.79 | 86.79 | 76.79 | 66.79 | 56.79 | 56.79 | 56.79 |
| C/S (wt%) | | 10 | | 10 | | 10 | | 10 | | |
| ECP-1 (wt%) | | | | | | | | | 10 | |
| ECP-2 (wt%) | | | | | | | | | | 10 |
| CM (wt%) | 2 | 2 | 2 | 2 | 2 | 2 | 2 | 2 | 2 | 2 |
| FR (wt%) | | | 20 | 20 | | | 20 | 20 | 20 | 20 |
| MC (wt%) | | | | | 10 | 10 | 10 | 10 | 10 | 10 |
| AO-1 (wt%) | 0.3 | 0.3 | 0.3 | 0.3 | 0.3 | 0.3 | 0.3 | 0.3 | 0.3 | 0.3 |
| AO-2 (wt%) | 0.3 | 0.3 | 0.3 | 0.3 | 0.3 | 0.3 | 0.3 | 0.3 | 0.3 | 0.3 |
| HALS (wt%) | 0.3 | 0.3 | 0.3 | 0.3 | 0.3 | 0.3 | 0.3 | 0.3 | 0.3 | 0.3 |
| UVA-1 (wt%) | 0.26 | 0.26 | 0.26 | 0.26 | 0.26 | 0.26 | 0.26 | 0.26 | 0.26 | 0.26 |
| UVA-2 (wt%) | 0.05 | 0.05 | 0.05 | 0.05 | 0.05 | 0.05 | 0.05 | 0.05 | 0.05 | 0.05 |

| Properties | | | | | | | | | | |
|---|---|---|---|---|---|---|---|---|---|---|
| Flammability, VW-1, UL 1581 | Fail | Fail | Fail | Fail | Fail | Fail | Pass | Pass | Fail | Pass |
| Chemical Resistance (19 chemicals) | | | | | | | | | | |
| Retention of tensile stress at break (%) (with 180° bending) | Failed in 1 chemical | Pass | Failed in 1 chemical | Pass | Pass | Pass | Pass | Pass | Pass | Pass |
| Retention of tensile strain at break (%) (with 180° bending) | Pass | Fail in 2 chemicals | Fail in 1 chemical | Failed in 2 chemicals | Failed in 1 chemical | Failed in 2 chemicals | Failed in 6 chemicals | Pass | Failed in 1 chemical | Failed in 6 chemicals |

**TABLE 3**

| | CE11 | CE12 | CE13 | CE14 |
|---|---|---|---|---|
| Compositions | | | | |
| PBT (wt%) | 66.79 | 56.79 | 56.79 | 56.79 |
| C/S (wt%) | | 10 | | |
| ECP-1 (wt%) | | | 10 | |
| ECP-2 (wt%) | | | | 10 |
| CM (wt%) | 2 | 2 | 2 | 2 |
| FR (wt%) | 20 | 20 | 20 | 20 |
| MC (wt%) | 10 | 10 | 10 | 10 |
| AO-1 (wt%) | 0.3 | 0.3 | 0.3 | 0.3 |
| AO-2 (wt%) | 0.3 | 0.30 | 0.3 | 0.3 |
| HALS (wt%) | 0.3 | 0.3 | 0.3 | 0.3 |
| UVA-1 (wt%) | 0.26 | 0.26 | 0.26 | 0.26 |
| UVA-2 (wt%) | 0.05 | 0.05 | 0.05 | 0.05 |

| Chemical Resistance (19 chemicals) | | | | |
|---|---|---|---|---|
| Retention of tensile stress at break (%) (with 180° bending) | Pass | Pass | Pass | Pass |
| Retention of tensile strain at break (%) (with 180° bending) | Failed in 2 chemicals | Failed in 2 chemicals | Failed in 2 chemicals | Failed in 8 chemicals |

## Claims

1. A fire-retardant copolyetherester composition having improved thermal stability, which comprises:
(a) 20-93.9 wt% of at least one copolyetherester;
(b) 5-30 wt% of at least one halogen-free flame retardant;
(c) 0.1-20 wt% of at least one nitrogen-containing compound; and
(d) 1-30 wt% of at least one core/shell polymer having a rubber-like core and an outer shell, with the core produced from an acrylate, a methacrylate, or a mixture thereof and the outer shell comprising a vinyl-series homopolymer or copolymer,
with the total weight of all components comprised in the composition totaling to 100 wt%, and wherein,
the at least one halogen-free flame retardant comprises at least one selected from the group consisting of phosphinates of the formula (III), disphosphinates of the formula (IV), and combinations or polymers thereof 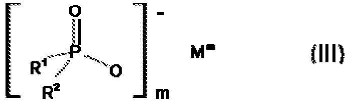 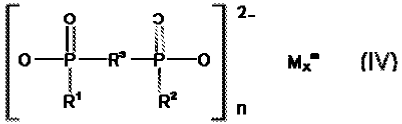 with R¹ and R² being identical or different and each of R¹ and R² being hydrogen, a linear, branched, or cyclic C₁ -C₆ alkyl group, or a C₆-C₁₀ aryl; R³ being a linear or branched C₁-C10 alkylene group, a C₆-C₁₀ arylene group, a C₆-C1₂ alkyl-arylene group, or a C₆-C₁₂ aryl-alkylene group; M being selected from calcium ions, aluminum ions, magnesium ions, zinc ions, antimony ions, tin ions, germanium ions, titanium ions, iron ions, zirconium ions, cerium ions, bismuth ions, strontium ions, manganese ions, lithium ions, sodium ions, potassium ions and combinations thereof; and m, n, and x each being a same or different integer of 1-4.

2. The fire-retardant copolyetherester composition of Claim 1, wherein the at least one halogen-free flame retardant is selected from the group consisting of aluminum methylethylphosphinate, aluminum diethylphosphinate, aluminum hypophosphite, and combinations or two or more thereof.

3. The fire-retardant copolyetherester composition of Claim 2, wherein the at least one halogen-free flame retardant is aluminum methylethylphosphinate or aluminum diethylphosphinate.

4. The fire-retardant copolyetherester composition of any of Claim 1-3, wherein the nitrogen-containing compound is selected from the group consisting of (i) melamine cyanurate, (ii) condensation products of melamine, (iii) reaction products of phosphoric acid with melamine, and (iv) reaction products of phosphoric acid with condensation products of melamine, or the at least one nitrogen-containing compound is melamine cyanurate.

5. The fire-retardant copolyetherester composition of any of Claims 1-3, which comprises 30-85 wt% of the at least one copolyetherester; 7.5-25 wt% of the at least one halogen-free flame retardant; 1-15 wt% of the at least one nitrogen-containing compound; and 1-20 wt% of the at least one core/shell polymer.

6. The fire-retardant copolyetherester composition of Claim 5, which comprises 40-70 wt% of the at least one copolyetherester; 10-25 wt% of the at least one halogen-free flame retardant; 2-15 wt% of the at least one nitrogen-containing compound; and 5-20 wt% of the at least one core/shell polymer.

7. An article comprising at least one component part formed of the fire-retardant copolyetherester composition of any of Claims 1-6.

8. The article of Claim 7, wherein the article is selected from motorized vehicle parts and electrical/electronic devices.

9. The article of Claim 7, wherein the article is selected from insulated wires and cables, and preferably, the insulated wires and cables comprise one or more insulating layers and/or insulating jackets that are formed of the fire-retardant copolyetherester composition of any of Claims 1-6.

## Patentansprüche

1. Feuerhemmende Copolyetheresterzusammensetzung, die eine verbesserte Wärmebeständigkeit aufweist und Folgendes umfasst:
(a) 20 - 93,9 Gew.-% mindestens eines Copolyetheresters;
(b) 5 - 30 Gew.-% mindestens eines halogenfreien flammhemmenden Mittels;
(c) 0,1 - 20 Gew.-% mindestens einer stickstoffhaltigen Verbindung; und
(d) 1 - 30 Gew.-% mindestens eines Kern-Mantel-Polymers, das einen kautschukartigen Kern und einen äußeren Mantel aufweist, wobei der Kern aus einem Acrylat, einem Methacrylat oder eine Mischung davon hergestellt wird und der äußere Mantel ein Homopolymer oder Copolymer der Vinylreihe umfasst,
wobei das Gesamtgewicht aller Komponenten, die in der Zusammensetzung enthalten sind, insgesamt 100 Gew.-% beträgt und wobei
das mindestens eine halogenfreie flammhemmende Mittel mindestens eines umfasst ausgewählt aus der Gruppe bestehend aus Phosphinaten der Formel (III), Diphosphinaten der Formel (IV) und Kombinationen oder Polymeren davon 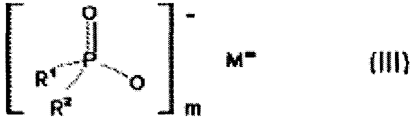 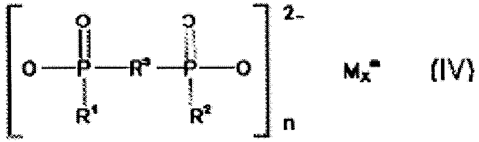 wobei R¹ und R² identisch oder verschieden sind und jedes von R¹ und R² Wasserstoff, eine lineare, verzweigte oder cyclische C₁-C₆-Alkylgruppe oder ein C₆-C₁₀-Aryl ist; R³ eine lineare oder verzweigte C₁-C₁₀-Alkylengruppe, eine C₆-C₁₀ Arylengruppe, eine C₆-C₁₂-Alkylarylengruppe oder eine C₆-C₁₂-Arylalkylengruppe ist; M unter Calciumionen, Aluminiumionen, Magnesiumionen, Zinkionen, Antimonionen, Zinnionen, Germaniumionen, Titanionen, Eisenionen Zirkoniumionen, Cerionen, Wismutionen, Strontiumionen, Manganionen, Lithiumionen, Natriumionen, Kaliumionen und Kombinationen davon ausgewählt ist; und m, n und x jeweils eine gleiche oder verschiedene ganze Zahl von 1 - 4 sind.

2. Feuerhemmende Copolyetheresterzusammensetzung nach Anspruch 1, wobei das mindestens eine halogenfreie flammhemmende Mittel aus der Gruppe ausgewählt ist bestehend aus Aluminiummethylethylphosphinat, Aluminiumdiethylphosphinat, Aluminiumhypophosphit und Kombinationen oder zwei oder mehreren davon.

3. Feuerhemmende Copolyetheresterzusammensetzung nach Anspruch 2, wobei das mindestens eine halogenfreie flammhemmende Mittel Aluminiummethylethylphosphinat oder Aluminiumdiethylphosphinat ist.

4. Feuerhemmende Copolyetheresterzusammensetzung nach einem der Ansprüche 1 - 3, wobei die stickstoffhaltige Verbindung aus der Gruppe ausgewählt ist bestehend aus (i) Melamincyanurat, (ii) Kondensationsprodukten von Melamin, (iii) Reaktionsprodukten von Phosphorsäure mit Melamin und (iv) Reaktionsprodukten von Phosphorsaure mit Kondensationsprodukten von Melamin, oder mindestens eine stickstoffhaltige Verbindung Melamincyanurat ist.

5. Feuerhemmende Copolyetheresterzusammensetzung nach einem der Ansprüche 1 - 3, die 30 - 85 Gew.-% des mindestens einen Copolyetheresters, 7,5 - 25 Gew.-% des mindestens einen halogenfreien flammhemmenden Mittels, 1 - 15 Gew.-% der mindestens einen stickstoffhaltigen Verbindung und 1 - 20 Gew.-% des mindestens einen Kern-Mantel-Polymers umfasst.

6. Feuerhemmende Copolyetheresterzusammensetzung nach Anspruch 5, die 40 - 70 Gew.-% des mindestens einen Copolyetheresters, 10 - 25 Gew.-% des mindestens einen halogenfreien flammhemmenden Mittels, 2 - 15 Gew.-% der mindestens einen stickstoffhaltigen Verbindung und 5 - 20 Gew.-% des mindestens einen Kern-Mantel-Polymers umfasst.

7. Artikel umfassend mindestens einen Komponententeil, der aus der feuerhemmenden Copolyetheresterzusammensetzung nach einem der Ansprüche 1 - 6 gebildet ist.

8. Artikel nach Anspruch 7, wobei der Artikel unter Teilen motorisierter Fahrzeuge und elektrischen/elektronischen Vorrichtungen ausgewählt wird.

9. Artikel nach Anspruch 7, wobei der Artikel unter isolierten Drähten und Kabeln ausgewählt wird und die isolierten Drähte und Kabel bevorzugt eine oder mehrere isolierende Schichten und/oder isolierende Mäntel umfassen, die aus der feuerhemmenden Copolyetheresterzusammensetzung nach einem der Ansprüche 1 - 6 gebildet sind.

## Revendications

1. Composition de copolyétherester ignifuge présentant une stabilité thermique améliorée, qui comprend:
(a) de 20 à 93,9 % en poids d'au moins un copolyétherester;
(b) de 5 à 30 % en poids d'au moins un agent ignifuge sans halogène;
(c) de 0,1 à 20 % en poids d'au moins un composé contenant de l'azote; et
(d) de 1 à 30 % en poids d'au moins un polymère à noyau/enveloppe présentant un noyau type caoutchouc et une enveloppe externe, avec le noyau produit à partir d'un acrylate, d'un méthacrylate, ou d'un mélange de ceux-ci et l'enveloppe externe comprenant un homopolymère ou un copolymère de la série du vinyle,
avec le poids total de tous les composants compris dans la composition totalisant jusqu'à 100 % en poids, et,
le au moins un agent ignifuge sans halogène comprenant au moins l'un sélectionné dans le groupe constitué des phosphinates de formule (III), des disphosphinates de formule (IV), et des combinaisons ou des polymères de ceux-ci 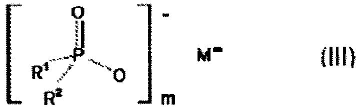 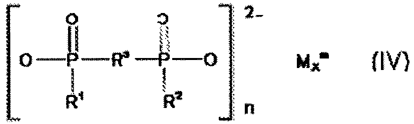 avec R¹ et R² étant identiques ou différents et chacun de R¹ et R² étant un atome d'hydrogène, un groupe alkyle en C₁ à C₆ linéaire, ramifié, ou cyclique, ou un groupe aryle en C₆ à C₁₀; R³ étant un groupe alcylène en C₁ à C₁₀ linéaire ou ramifié, un groupe arylène en C₆ à C₁₀, un groupe (alkyle en C₆ à C₁₂)-arylène, ou un groupe (aryle en C₆ à C₁₂)-alcylène; M étant sélectionné parmi les ions calcium, les ions aluminium, les ions magnésium, les ions zinc, les ions antimoine, les ions étain, les ions germanium, les ions titane, les ions fer, les ions zirconium, les ions cérium, les ions bismuth, les ions strontium, les ions manganèse, les ions lithium, les ions sodium, les ions potassium et leurs combinaisons; et m, n, et x chacun étant un nombre entier identique ou différent d'une valeur de 1 à 4.

2. Composition de copolyétherester ignifuge selon la revendication 1, dans laquelle le au moins un agent ignifuge sans halogène est sélectionné dans le groupe constitué du méthyléthylphosphinate d'aluminium, du diéthylphosphinate d'aluminium, de l'hypophosphite d'aluminium, et des combinaisons de deux ou plusieurs d'entre eux.

3. Composition de copolyétherester ignifuge selon la revendication 2, dans laquelle le au moins un agent ignifuge sans halogène est le méthyléthylphosphinate d'aluminium ou le diéthylphosphinate d'aluminium.

4. Composition de copolyétherester ignifuge selon l'une quelconque des revendications 1 à 3, dans laquelle le composé contenant de l'azote est sélectionné dans le groupe constitué (i) du cyanurate de mélamine, (ii) des produits de condensation de la mélamine, (iii) des produits réactionnels de l'acide phosphorique avec la mélamine, et (iv) des produits réactionnels de l'acide phosphorique avec les produits de condensation de la mélamine, ou le au moins un composé contenant de l'azote est le cyanurate de mélamine.

5. Composition de copolyétherester ignifuge selon l'une quelconque des revendications 1 à 3, qui comprend de 30 à 85 % en poids du au moins un copolyétherester; de 7,5 à 25 % en poids du au moins un agent ignifuge sans halogène; de 1 à 15 % en poids du au moins un composé contenant de l'azote; et de 1 à 20 % en poids du au moins un polymère à noyau/enveloppe.

6. Composition de copolyétherester ignifuge selon la revendication 5, qui comprend de 40 à 70 % en poids du au moins un copolyétherester; de 10 à 25 % en poids du au moins un agent ignifuge sans halogène; de 2 à 15 % en poids du au moins un composé contenant de l'azote; et de 5 à 20 % en poids du au moins un polymère à noyau/enveloppe.

7. Article comprenant au moins une partie constitutive formée de la composition de copolyétherester ignifuge selon l'une quelconque des revendications 1 à 6.

8. Article selon la revendication 7, dans lequel l'article est sélectionné parmi les pièces de véhicule motorisé et les dispositifs électriques/électroniques.

9. Article selon la revendication 7, dans lequel l'article est sélectionné parmi les fils et les câbles isolés, et préférablement, les fils et les câbles isolés comprennent une ou plusieurs couches isolantes et/ou gaines isolantes qui sont formées de la composition de copolyétherester ignifuge selon l'une quelconque des revendications 1 à 6.
